# EUROPEAN PATENT SPECIFICATION

(11) **EP 2 585 715 B1**
(45) Date of publication and mention of the grant of the patent: **04.03.2015**
(21) Application number: 11757958.1
(22) Date of filing: 30.08.2011
(51) Int. Cl.: F03D 9/00, F03D 11/00, F03D 11/02

(54) **OIL SUPPLY IN RENEWABLE ENERGY TURBINE GENERATOR**
ÖLVERSORGUNG EINES TURBINENGENERATORS FÜR ERNEUERBARE ENERGIEN
ALIMENTATION EN HUILE DANS UN GÉNÉRATEUR À TURBINE D'ÉNERGIE RENOUVELABLE

(43) Date of publication of application: 01.05.2013
(73) Proprietor: MITSUBISHI HEAVY INDUSTRIES, Ltd., TOKYO, Tokyo 108-8215 (JP)
(72) Inventor: STEIN, Uwe, Loanhead, Midlothian, EH20 9TB (GB); FOX, Robert, Loanhead, Midlothian, EH20 9TB (GB); ROBERTSON, Alasdair, Loanhead, Midlothian, EH20 9TB (GB); RAMPEN, William, Loanhead, Midlothian, EH20 9TB (GB)
(74) Representative: Hindle, Alistair Andrew
(86) International application number: PCT/JP2011/004842
(87) International publication number: WO 2013/030886

(56) References cited:
- GB-A- 2 463 647
- JP-A- 2007 051 584
- US-A1- 2009 155 095
- US-A1- 2010 032 959
- US-A1- 2011 142 596

## Description

### Technical Field

The invention relates to the field of renewable energy turbine generators, such as wind turbine generators (WTGs) or tidal turbine generators. The invention concerns such devices employing a hydraulic transmission including a hydraulic pump driven by a turbine and a hydraulic motor which drives an electricity generator or other load.

### Background Art

It is known for the bearings of hydraulic pumps and motors in WTGs (and typically also the gearbox in WTGs having gearboxes) to be fed a supply of oil which has been cleaned and which is relatively cool. The relatively low temperature is important in order to keep up the viscosity of the oil, in order to give the bearings a long lifetime. The cleaning of oil is also important to minimise wear of the hydraulic pumps and motors.

US2010/032959 discloses a wind turbine system comprising a hub, a shaft coupled to the hub and a hydraulic pump disposed adjacent to the shaft and configured to provide a pressurized fluid to a motor. In one embodiment it has a hydraulic pumping system which includes a pumping subsystem and a secondary subsystem in fluid communication between a high pressure fluid line and a low pressure fluid line. The secondary subsystem can perform one or more secondary functions; for example, high pressure flow of the operating fluid in the secondary subsystem can be used to lubricate bearings.

However, it is preferable for the oil which is employed as a working fluid and introduced into the working chambers of the hydraulic pump through a line to have a relatively low viscosity. This increases the energy efficiency of the hydraulic pump and motor.

It has been proposed to employ different oils for the bearings and for the working chambers. However, this requires two seals to be used on each side of the cam, one to retain each of the oils with a void therebetween to allow leaks to drain away, giving a total of four seals. Shaft seals which must provide very good barriers are difficult to engineer if they are to remain reliable for a long period of time and can be difficult to maintain as they are located deep within the pump, or motor respectively.

Accordingly, the invention aims to provide an improved arrangement for supplying relatively high viscosity oil to the bearings of a renewable energy turbine generator pump and motor, and relatively low viscosity oil to the working chambers. Some embodiments of the invention also aim to supply relatively high viscosity oil to the crank case of hydraulic pumps and/or motors to lubricate parts such as piston rollers.

### Summary of Invention

According to a first aspect of the invention there is provided a renewable energy turbine generator comprising:
a rotor, a generator and a hydraulic transmission which transmits rotational energy from the rotor to the generator,
the hydraulic transmission comprising a variable displacement hydraulic pump which is driven by the rotor, a variable displacement hydraulic motor which is coupled to the generator, and an oil circuit comprising a high pressure oil line which is arranged between a discharge side of the hydraulic pump and an intake side of the hydraulic motor, and a low pressure line which is arranged between an intake side of the hydraulic pump and a discharge side of the hydraulic motor,
each of the hydraulic pump and the hydraulic motor comprising: a plurality of working chambers each of which is defined by a cylinder and a piston slidably mounted in the cylinder, a rotatable shaft couple to a cam, the cam having a cam surface in engagement with the said pistons, the cycles of working chamber volume being coupled to rotation of the rotatable shaft, bearings in engagement with the rotatable shaft, and a plurality of valves for regulating the net displacement of working fluid between each working chamber and the high and low pressure lines, at least one valve associated with each working chamber being an electronically controlled valve, said electronically controlled valves being operable by the controller to select the volume of working fluid displaced by each said working chamber on each cycle of working chamber volume and thereby regulate the net rate of displacement of working fluid by the hydraulic pump and the hydraulic motor respectively,
wherein the hydraulic pump and/or the hydraulic motor comprise a reduced temperature oil feed configured to introduce oil to the bearings, wherein the renewable energy turbine generator comprises at least one first temperature regulator for regulating the temperature of oil to the reduced temperature oil feed such that the oil supplied by the reduced temperature oil feed is cooler than the oil supplied from the oil circuit to the working chambers of the hydraulic pump and/or hydraulic motor respectively.

Thus, oil supplied through the reduced temperature oil feeds plays a direct role in lubricating the bearings. The bearings (of the hydraulic pump and/or hydraulic motor respectively) are preferably immersed in oil received from the reduced temperature oil feeds.

Where the hydraulic pump and the hydraulic motor respectively comprise a reduced temperature oil feed, a single first temperature regulator may regulate the temperature of oil provided through the reduced temperature oil feed of each of the hydraulic pump and the hydraulic motor. Alternatively, the hydraulic pump and hydraulic motor may each have a separate first temperature regulator. Typically, the at least one first temperature regulator is a cooler. It may be that either or both of the reduced temperature oil feeds are in fluid communication with the low pressure line.

It may be that the reduced temperature oil feeds are in fluid communication with the oil circuit to receive oil from the oil circuit and to regulate the temperature of the received oil before it is introduced to the bearings.

It may be that the renewable energy turbine generator comprises at least one first filter arranged to filter at least a proportion of oil circulating in the oil circuit and at least one second filter interposed in the reduced temperature oil feeds to filter oil before it is introduced to the bearings, wherein the at least one second filter is finer than the at least one first filter.

In some embodiments, at least one second filter is arranged downstream of the at least one first filter to filter oil some or all of which has passed through at least one first filter since it was last discharged by the hydraulic pump or the hydraulic motor.

It may be that the renewable energy turbine generator further comprises at least one second temperature regulator to regulate the temperature of (typically cool) oil in the oil circuit.

The at least one second temperature regulator may be in thermal communication with oil in the oil circuit. The oil circuit may comprise one or more branches (which receive oil from the oil circuit and reintroduce oil to the oil circuit) and the at least one second temperature regulator may be in thermal communication with at least one said branch. It may be that the or each reduced temperature oil feed is in fluid communication with a said branch, downstream of at least part of one second temperature regulator and thereby directs oil which has already been temperature regulated at least in part by at least one second temperature regulator to at least one first temperature regulator and then to the bearings.

The at least one first temperature regulator may be a refrigerator. The at least one first temperature regulator may be thermostatic. The at least one first temperature regulator may be an oil-water temperature regulator, or an oil-air temperature regulator.

The at least one second temperature regulator may be a refrigerator. The at least one second temperature regulator may be thermostatic. The at least one second temperature regulator may be an oil-water temperature regulator, or an oil-air temperature regulator.

It may be that the second oil receiving inlet is in fluid communication with the first conduit downstream of the first filter. Thus, oil filtered by the second filter may have already been filtered by the first filter.

It may be that the hydraulic pump and/or the hydraulic motor respectively comprise a restrictor (for example, a restrictor ring or other imperfect seal) around the respective rotating shaft which in part defines and retains oil within a volume including the bearings, wherein the reduced temperature oil feed is in fluid communication with the volume including the bearings.

Typically, the restrictor restricts rather than prevents the passage of oil. In this case, as the restrictor does not prevent the passage of oil, oil will gradually pass through or around the restrictor, and in due course mix with oil from the oil circuit. Thus the restrictor typically divides oil from the reduced temperature oil feed from oil from the oil circuit. This is technically simpler, more cost effective and requires less maintenance than providing a perfect shaft seal to retain oil within the bearings. It may be that the restrictor takes the form of a restrictor ring, formed of plastics material, and typically having an axial clearance of around 0.25mm. It may be that the restrictor is a sealable restrictor, for example a sealable restrictor which allows flow in a single direction only. For example, it may be that the sealable restrictor takes the form of a resilient flap which provides a seal but which, under the influence of a pressure differential with higher pressure on the side in communication with the volume including the bearings, lifts to allow the flow of oil out of the volume including the bearings. Thus, oil flows in only one direction, from the low temperature oil flow, towards the low pressure line. The restrictor reduces ingress of swarf, debris and contamination into the bearings.

It may be that the reduced temperature oil feed is configured to direct oil through the or each respective bearing into a crank case surrounding the working chambers of cyclically varying volume.

Oil from the oil circuit and oil from the reduced temperature oil feed may mix within the hydraulic pump and/or within the hydraulic motor.

Typically, oil from the reduced temperature oil feed eventually mixes with oil received by the working chamber from the oil circuit, after lubricating the bearings. The mixed oil is typically directed to a low pressure line for reuse.

The hydraulic pump and/or the hydraulic motor respectively may comprise a crank case enclosing the cam and pistons, wherein the oil from the oil circuit and oil from the reduced temperature oil feed mix within the crank case.

Typically, there is at least some leakage of oil from the working chambers into the crank case. Oil from the reduced temperature oil feed passes through the bearings into the crank case. Therefore, these two sources of oil mix in the crank case. Typically, oil in the crank case is at a temperature intermediate the temperature of the oil introduced to the bearings by the reduced temperature oil feed and the oil received by the working chambers of the hydraulic pump and/or hydraulic motor, as appropriate. Typically, less than 5% of the oil received by the working chambers of the hydraulic pump and/or hydraulic motor mixes with the oil from the reduced temperature oil feed (typically after passing into the crank case).

The hydraulic pump and/or hydraulic motor may further comprise a drain in fluid communication with the crank case, through which oil from both the oil circuit and the reduced temperature oil feed is removed.

Typically the flow rate of oil through the reduced temperature oil feed to the bearings of the hydraulic pump and/or the hydraulic motor is less than one tenth or more preferably less than one twentieth or less than one fiftieth of the maximum operating rate of receipt of oil from the oil circuit by the hydraulic pump or hydraulic motor, respectively.

The temperature of the oil received from the oil circuit by the working chambers of the hydraulic pump and the hydraulic motor is typically in the range of 5 to 70°C, and normally in the range 30 to 60°C. The oil supplied to the bearing through the reduced temperature oil feed may preferably be in the range of 20 to 40°C.

The hydraulic pump may be operable only as a pump. However, the hydraulic pump may be a pump-motor which is operable as a pump or as a motor in alternative operating modes. Similarly, the hydraulic motor may be operable only as a motor. However, the hydraulic motor may be a pump-motor which is operable as a pump or as a motor in alternative operating modes. Machines capable of functioning as either a pump or a motor in alternative operating modes are disclosed in EP 0494236, for example.

The renewable energy turbine generator may be a wind turbine generator and the rotor may comprise a plurality of blades.

According to a second aspect of the invention there is provided a method of supplying oil to a hydraulic pump and/or hydraulic motor of a renewable energy turbine generator,
the renewable energy turbine comprising:
a rotor, a generator and a hydraulic transmission which transmits rotational energy from the rotor to the generator,
the hydraulic transmission comprising a variable displacement hydraulic pump which is driven by the rotor, a variable displacement hydraulic motor which is coupled to the generator, and an oil circuit comprising a high pressure oil line which is arranged between a discharge side of the hydraulic pump and an intake side of the hydraulic motor, and a low pressure line which is arranged between an intake side of the hydraulic pump and a discharge side of the hydraulic motor,
each of the hydraulic pump and the hydraulic motor comprising: a plurality of working chambers each of which is defined by a cylinder and a piston slidably mounted in the cylinder, a rotatable shaft couple to a cam, the cam having a cam surface in engagement with the said pistons, the cycles of working chamber volume being coupled to rotation of the rotatable shaft, bearings in engagement with the rotatable shaft, and a plurality of valves for regulating the net displacement of working fluid between each working chamber and the high and low pressure lines, at least one valve associated with each working chamber being an electronically controlled valve, said electronically controlled valves being operable by the controller to select the volume of working fluid displaced by each said working chamber on each cycle of working chamber volume and thereby regulate the net rate of displacement of working fluid by the hydraulic pump and the hydraulic motor respectively, wherein the method comprises introducing oil to the bearings of the hydraulic pump and/or the hydraulic motor at a lower temperature than the oil supplied from the oil circuit to the working chambers of the hydraulic pump and/or hydraulic motor respectively.

The method may comprise filtering the oil introduced to the bearings through a finer filter than oil in the oil circuit.

It may be that the hydraulic pump and/or the hydraulic motor comprise a crank case and the oil introduced to the bearings and oil in the oil circuit mix in the crank case.

Further optional features of the method of the second aspect correspond to features discussed above in relation to the first aspect of the invention.

### Brief Description of Drawings

[fig.1]Figure 1 is a schematic diagram of a wind turbine generator illustrating feeds for supplying oil;
[fig.2]Figure 2 is a schematic diagram of a cross-section through a hydraulic pump; and
[fig. 3] Figure 3 is a schematic cross section through a hydraulic motor illustrating a cooled and filtered feed of oil to the bearings.

### Description of Embodiments

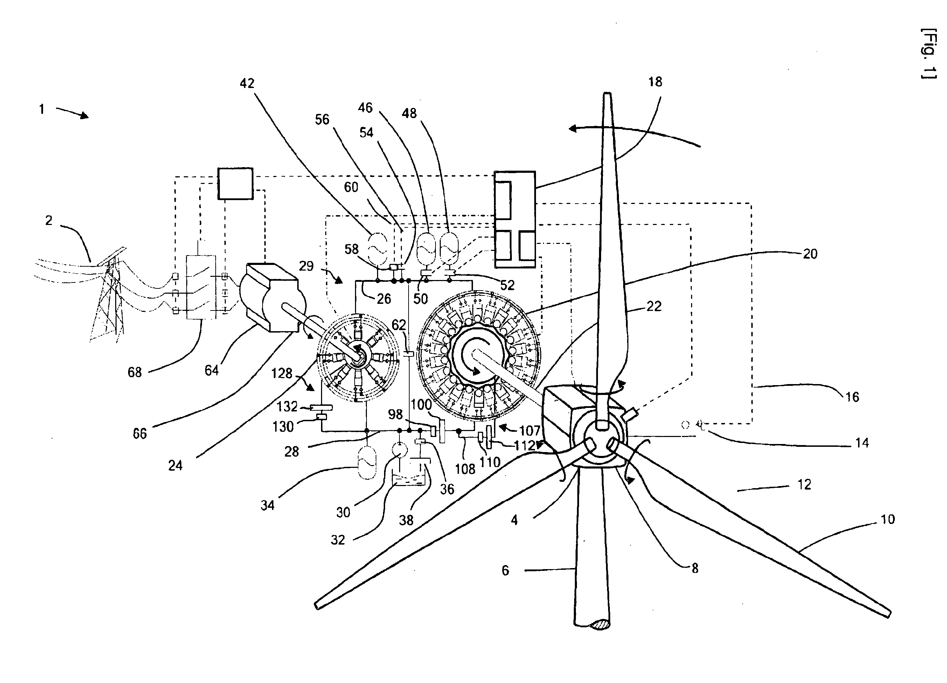

Figure 1 illustrates an example embodiment of the invention in the form of a Wind Turbine Generator (WTG) 1, acting as the renewable energy turbine device, and connected to an electricity network 2. The WTG comprises a nacelle 4 rotatably mounted to a tower 6 and having mounted thereon a hub 8 supporting three blades 10 known collectively as the rotor 12. An anemometer 14 attached externally to the nacelle provides a measured wind speed signal 16 to a controller 18.

The hub is connected directly to a hydraulic pump 20, through a drive shaft 22. The pump is a variable displacement radial piston pump of the type in which the volume of hydraulic oil displaced by each cylinder during each cycle of cylinder volume is selectable through the control of electronic valves. The discharge side of the pump is connected to the intake side of a hydraulic motor 24, which is a variable displacement radial piston motor of the type in which the volume of hydraulic oil displaced by each cylinder during each cycle of cylinder volume is selectable through the control of electronic valves. The fluid connection between the discharge side of the pump and the intake side of the hydraulic motor is through a high pressure oil line 26 and a low pressure oil line 28 extends from a discharge side of the motor to an intake side of the pump. The high pressure oil line and low pressure oil line are each part of an oil circuit shown generally as 29.

A charge pump 30 continuously draws fluid from a reservoir 32 into the low pressure oil line, which is connected to a low pressure accumulator 34. A pressure relief valve 36 returns fluid from the low pressure oil line to the reservoir through a filter 38. A smoothing accumulator 42 is connected to the high pressure oil line between the pump and the hydraulic motor. A first high pressure accumulator 46 and a second high pressure accumulator 48 are connected to the high pressure oil line through a first isolating valve 50 and a second isolating valve 52 respectively.

Filter 100 and cooler 98 may be installed directly in the hydraulic circuit (as shown in Figure 1) or in a bypass loop (not shown). When incorporated in a bypass loop, a check valve (with a lift setting of 0.5 bar, for example) is located in the bypassed part of the main circuit. The bypass loop has a smaller diameter bore than the bypassed part of the main circuit. Thus, the relative proportion of the total flow of oil which passes through the filter and cooler, and the proportion which continues through the bypassed part of main circuit are controlled. In some embodiments, all of the circulating oil passes through the filter and cooler unless the flow rate exceeds a threshold in which case some oil continues through the bypassed part of the circuit. The threshold may be close to the maximum flow rate which in some examples is around 5,000 litres per minute. The temperature in the high pressure oil line is measured with a temperature sensor 54, which provides the controller with high pressure oil line temperature signal 56. A pressure sensor 58 measures the pressure in the high pressure oil line and transmits a high pressure oil line pressure signal 60 to the controller. A high pressure relief valve 62 connects the high pressure and low pressure oil lines.

The hydraulic motor is connected to a generator 64, through a generator shaft 66. The generator is connected to an electricity network through a contactor 68, which is under the control of a contactor controller 70 and is operable to selectively connect the generator to or isolate the generator from the electricity network.

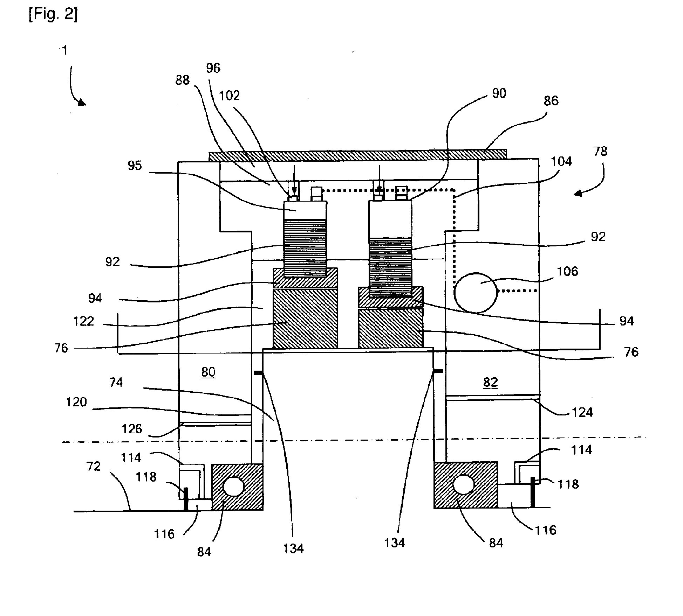

With reference to Figure 2, the pump comprises a pump shaft 72 which is integral with or in driving connection with drive shaft 22. The pump shaft is connected to a cam support 74 which supports multi-lobal cams 76. The pump has an outward ring 78 comprising axially spaced first and second end plates 80, 82 which are independently mounted on the pump shaft through bearings 84. The pump is generally rotationally symmetric about an axis extending through the drive shaft and has a removable cover 86. Demountable cylinder blocks 88 are circumferentially distributed around the pump and define cylinders 90 within which pistons 92 are slidably retained in driving engagement with the cams through piston rollers 94. The volume defined between the cylinders and their respective pistons functions as a working chamber 95 of cyclically varying volume. A low pressure gallery 96 extends around the periphery of the cylinders, underneath the cover. The pressure of hydraulic oil in the low pressure gallery in use is low relative to pressure in the high pressure oil manifold, but may in practice be pressurised to some extent, for example to around 5 bar to facilitate the flow of oil into the cylinders.

With reference to Figures 1 and 2, low pressure hydraulic oil is supplied to the working chambers by the following path. A-primary temperature regulator 98, functioning as the second temperature regulator, receives hydraulic oil from the low pressure oil line through a first oil receiving inlet 99, usually at a temperature of 40 to 60°C during normal operation and cools it. At this cooled temperature, the viscosity of the oil is lowered and suitable for efficient use in the working chambers of the pump. In some embodiments, the primary temperature regulator functions only as a cooler. In other embodiments, the primary temperature regulator may warm the hydraulic oil in some circumstances, for example, on start up in cold conditions. The resulting filtered, temperature regulated oil is fed through a primary filter 100, functioning as a first filter, and is then supplied to the low pressure gallery where it is supplied to the working chambers through electronically controlled valves 102. This input functions as the intake side of the hydraulic pump.

Oil which is displaced by the working chambers is output through a high pressure oil manifold 104 and through a conduit 106 to the high pressure oil line. The output from the conduit functions as the discharge side of the hydraulic pump.

The pump further includes a reduced temperature oil feed 107 which introduces oil to the bearings. The reduced temperature oil feed includes an oil receiving inlet 108 which receives oil, downstream of the primary filter. The amount of oil received may, for example, be less than 5% of the oil which passes into the working chambers at maximum flow rate. The received oil is cooled further, typically to around 20-40°C by a supplementary temperature regulator 110 (functioning as the first temperature regulator). The supplementary temperature regulator is typically a refrigerator. The further cooled oil is passed through a supplementary filter 112, functioning as the first filter, which is finer than the first filter and therefore filters the oil to an increasing level of purity. For example the supplementary filter may have a mesh size of 3 microns where the first filter has a mesh size of 10 microns. The oil passed through the supplementary filter is then supplied through an input line 114 into a space 116 defined between a set of bearings and a shaft seal 118. Thus, oil is supplied to the bearing at a lower temperature than oil is supplied to the working chambers. The oil supplied to the bearing is therefore more viscous, which is preferable for both the performance of and lifetime of the bearings.

The pump has a crank case 120, including the oil filled space around the ring cam 122, part of the pump shaft and the piston rollers. In a first example embodiment, oil from low pressure oil line is also supplied through crankshaft supply conduit 124 to the crank case. The oil drains away to the low pressure oil line through a drain 126. The restrictor allows slow leakage of oil and thus there is mixing of oil from the reduced temperature feed and oil supplied directly from the supplementary filter which takes place in the crank case.

In a second example embodiment, the oil supplied through the conduit 124 to the crank case is oil from the reduced temperature feed, which has been cooled by the supplementary temperature regulator and filtered by the supplementary filter. This can be preferable in some embodiments where it is desired to have relatively high viscosity oil in the crank case.

In a third example embodiment, the oil supplied through the conduit 124 to the crank case is at a third temperature, regulated by a third temperature regulator, for example a temperature intermediate the temperature at which oil is supplied to the low pressure gallery and the temperature at which oil is supplied to the bearing.

With reference to Figure 1, reduced temperature oil is also supplied to the bearings of the motor. A further temperature regulator 130 (also functioning as a first temperature regulator) receives oil from the low pressure line and cools it to around 20 - 40°C. The temperature of oil in the high pressure oil line is typically lower than the temperature of oil in the low pressure oil line because the hydraulic motor reduces pressure and the oil flow is accelerated. The accelerated flow of oil results in friction, and so temperature is increased. The reduced temperature oil is fed through a further supplementary filter 132 to the bearing of the motor in a similar way to the reduced temperature oil supplied to the pump. In an alternative embodiment, oil cooled by the second temperature regulator (and typically also filtered by the second filter) is supplied to the bearings of both the pump and the motor.

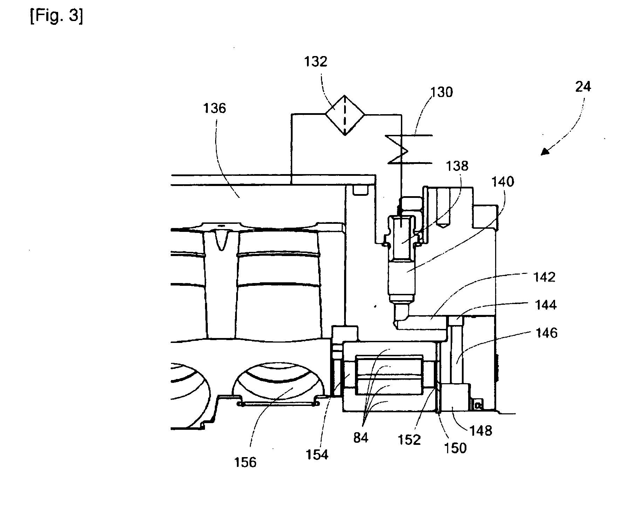

Figure 3 provides further detail of the supply of reduced temperature oil feed to a hydraulic motor. Oil received from a low pressure gallery 136 is supplied through filter 132 and cooler 130 to a hydraulic connection 138. It passes through a radial drillway 140 and axial drillway 142, through an annulus 144 and a further radial drillway 146 to an annular space 148. A shim 150 includes one or more apertures 152 through which oil passes gradually from the annular space into the bearings 84, which are flooded with the reduced temperature oil. Once the oil has passed through the bearings it passes through an aperture 154 into the crankcase 156.

Further variations and modifications may be made within the scope of the invention herein disclosed.

### Reference Signs List

- 1: Wind turbine generator (WTG)
- 2: Electricity network
- 4: Nacelle
- 6: Tower
- 8: Hub
- 10: Blades
- 12: Rotor
- 14: Anemometer
- 16: Wind speed signal
- 18: Controller
- 20: Hydraulic pump
- 22: Drive shaft
- 24: Hydraulic motor
- 26: High pressure oil line
- 28: Low pressure oil line
- 29: Oil circuit
- 30: Charge pump
- 32: Reservoir
- 34: Low pressure accumulator
- 36: Pressure relief valve
- 38: Filter
- 42: Accumulator
- 46: First high pressure accumulator
- 48: Second high pressure accumulator
- 50: First isolating valve
- 52: Second isolating valve
- 54: Temperature sensor
- 56: Temperature signal
- 58: Pressure sensor
- 60: Pressure signal
- 62: Relief valve
- 64: Generator
- 66: Generator shaft
- 68: Contactor
- 70: Contactor controller
- 72: Pump shaft
- 74: Cam support
- 76: Cams
- 78: Outward ring
- 80: First end plate
- 82: Second end plate
- 84: Bearings
- 86: Cover
- 88: Cylinder blocks
- 90: Cylinders
- 92: Pistons
- 94: Piston rollers
- 95: Working chambers
- 96: Low pressure gallery
- 98: Primary temperature regulator
- 99: First oil receiving inlet
- 100: Primary filter
- 102: Electronically controlled valves
- 104: High pressure oil manifold
- 106: Conduit
- 107: Reduced temperature oil feed
- 108: Oil receiving inlet
- 110: Supplementary temperature regulator
- 112: Supplementary filter
- 114: Input line
- 116: Space
- 118: Shaft seal
- 120: Crank case
- 122: Ring cam
- 124: Crankshaft supply conduit
- 126: Drain
- 128: Further reduced temperature oil feed
- 130: Further temperature regulator
- 132: Further supplementary filter
- 134: Restrictor ring
- 136: Low pressure gallery
- 138: Hydraulic connection
- 140: Radial drillway
- 142: Axial drillway
- 144: Annulus
- 146: Further radial drillway
- 148: Annular space
- 150: Shim
- 152: Aperture
- 154: Aperture
- 156: Crankcase

## Claims

1. A renewable energy turbine generator (1) comprising:
a rotor (12), a generator (64) and a hydraulic transmission which transmits rotational energy from the rotor to the generator,
the hydraulic transmission comprising a variable displacement hydraulic pump (20) which is driven by the rotor, a variable displacement hydraulic motor (24) which is coupled to the generator, and an oil circuit comprising a high pressure oil line (26) which is arranged between a discharge side of the hydraulic pump and an intake side of the hydraulic motor, and a low pressure line (28) which is arranged between an intake side of the hydraulic pump and a discharge side of the hydraulic motor,
each of the hydraulic pump and the hydraulic motor comprising: a plurality of working chambers (95) each of which is defined by a cylinder (90) and a piston (92) slidably mounted in the cylinder, a rotatable shaft coupled to a cam, the cam having a cam surface in engagement with the said pistons, the cycles of working chamber volume being coupled to rotation of the rotatable shaft, bearings in engagement with the rotatable shaft, and a plurality of valves for regulating the net displacement of working fluid between each working chamber and the high and low pressure lines, at least one valve associated with each working chamber being an electronically controlled valve (102), said electronically controlled valves being operable by the controller to select the volume of working fluid displaced by each said working chamber on each cycle of working chamber volume and thereby regulate the net rate of displacement of working fluid by the hydraulic pump and the hydraulic motor respectively,
wherein the hydraulic pump and/or the hydraulic motor comprise a reduced temperature oil feed (107, 128) configured to introduce oil to the bearings, wherein the renewable energy turbine generator comprises at least one first temperature regulator (110, 130) for regulating the temperature of oil to the reduced temperature oil feed such that the oil supplied by the reduced temperature oil feed is cooler than the oil supplied from the oil circuit to the working chambers of the hydraulic pump and/or hydraulic motor respectively.

2. A renewable energy turbine generator according to claim 1, wherein the reduced temperature oil feeds are in fluid communication with the oil circuit to receive oil from the oil circuit and to regulate the temperature of the received oil before it is introduced to the bearings.

3. A renewable energy turbine generator according to claim 2, wherein the or each reduced temperature oil feed is in fluid communication with the low pressure line.

4. A renewable energy turbine generator according to claim 2, comprising at least one first filter (100) arranged to filter at least a proportion of oil circulating in the oil circuit and at least one second filter (112) interposed in the reduced temperature oil feeds to filter oil before it is introduced to the bearings, wherein the at least one second filter is finer than the at least one first filter.

5. A renewable energy turbine generator according to claim 1, further comprising at least one second temperature regulator to regulate the temperature of oil in the oil circuit.

6. A renewable energy turbine generator according to claim 1, wherein the hydraulic pump and/or the hydraulic motor respectively comprises a restrictor around the respective rotating shaft which in part defines and retains oil within a volume including the bearings, wherein the reduced temperature oil feed is in fluid communication with the volume including the bearings.

7. A renewable energy turbine generator according to claim 1, wherein oil from the oil circuit and oil from the reduced temperature oil feed mix within the hydraulic pump and/or within the hydraulic motor.

8. A renewable energy turbine generator according to claim 7, wherein the hydraulic pump and/or the hydraulic motor comprise a crank case enclosing the cam and pistons, wherein the oil from the oil circuit and oil from the reduced temperature oil feed mix within the crank case.

9. A renewable energy turbine generator according to claim 7, wherein the temperature between the oil supplied to the bearings of the hydraulic pump and/or the hydraulic motor is at most 40°C less than the temperature of the oil received from the oil circuit by the working chambers of the hydraulic pump and/or the hydraulic motor respectively.

10. A renewable energy turbine generator according to claim 1, wherein the renewable energy turbine generator is a wind turbine generator and the rotor comprises a plurality of blades.

11. A method of supplying oil to a hydraulic pump and/or hydraulic motor of a renewable energy turbine generator (1),
the renewable energy turbine comprising:
a rotor (12), a generator (64) and a hydraulic transmission which transmits rotational energy from the rotor to the generator,
the hydraulic transmission comprising a variable displacement hydraulic pump (20) which is driven by the rotor, a variable displacement hydraulic motor (24) which is coupled to the generator, and an oil circuit comprising a high pressure oil line (26) which is arranged between a discharge side of the hydraulic pump and an intake side of the hydraulic motor, and alow pressure line (28) which is arranged between an intake side of the hydraulic pump and a discharge side of the hydraulic motor,
each of the hydraulic pump and the hydraulic motor comprising: a plurality of working chambers (95) each of which is defined by a cylinder (90) and a piston (92) slidably mounted in the cylinder, a rotatable shaft couple to a cam, the cam having a cam surface in engagement with the said pistons, the cycles of working chamber volume being coupled to rotation of the rotatable shaft, bearings in engagement with the rotatable shaft, and a plurality of valves for regulating the net displacement of working fluid between each working chamber and the high and low pressure lines, at least one valve associated with each working chamber being an electronically controlled valve (102), said electronically controlled valves being operable by the controller to select the volume of working fluid displaced by each said working chamber on each cycle of working chamber volume and thereby regulate the net rate of displacement of working fluid by the hydraulic pump and the hydraulic motor respectively,
wherein the method comprises introducing oil to the bearings of the hydraulic pump and/or the hydraulic motor at a lower temperature than the oil supplied from the oil circuit to the working chambers of the hydraulic pump and/or hydraulic motor respectively.

12. A method according to claim 11, wherein the method comprises filtering the oil introduced to the bearings through a finer filter than oil in the oil circuit.

## Patentansprüche

1. Turbinengenerator für erneuerbare Energien (1), umfassend:
einen Rotor (12), einen Generator (64) und ein Hydraulikgetriebe, das die Drehenergie von dem Rotor zum Generator überträgt,
wobei das Hydraulikgetriebe eine hydraulische Verstellpumpe (20), die von dem Rotor, einem hydraulischen Verstellpumpenmotor (24), angetrieben wird, der mit dem Generator gekoppelt ist, und
einen Ölkreislauf, der eine Hochdruck-Ölleitung (26) umfasst, die zwischen einer Ablassseite der Hydraulikpumpe und einer Einlassseite des Hydraulikmotors angeordnet ist, und eine Niederdruckleitung (28), die zwischen einer Einlassseite der Hydraulikpumpe und einer Ablassseite des Hydraulikmotors angeordnet ist, wobei die Hydraulikpumpe und der Hydraulikmotor jeweils Folgendes aufweisen:
mehrere Arbeitskammern (95), die jeweils von einem Zylinder (90) definiert werden,
und einen Kolben (92), der verschiebbar in dem Zylinder angebracht ist, eine drehbare Welle, die mit einem Nocken gekoppelt ist, wobei der Nocken eine Nockenoberfläche aufweist, die in Eingriff mit den Kolben steht, wobei die Zyklen des Arbeitskammervolumens mit der Drehung der drehbaren Welle gekoppelt sind, und die Lager in Eingriff mit der drehbaren Welle stehen und
mehrere Ventile zum Regeln der Nettoverschiebung von Arbeitsfluid zwischen jeder Arbeitskammer und den Hoch- und Niederdruckleitungen, wobei mindestens ein Ventil, das mit jeder Arbeitskammer verbunden ist, ein elektronisch gesteuertes Ventil (102) ist, wobei die elektronisch gesteuerten Ventile von der Steuerung zum Auswählen des Volumens des Arbeitslfluids, das von jeder Arbeitskammer in jedem Zyklus des Arbeitskammervolumens verdrängt wird, betrieben werden kann, um dadurch die Nettoverdrängungsrate des Arbeitsfluids von der Hydraulikpumpe bzw. dem Hydraulikmotor zu regeln;
wobei die Hydraulikpumpe und/oder der Hydraulikmotor eine Ölzufuhr mit reduzierter Temperatur (107, 128) umfassen, die zum Einleiten von Öl in das Lager konfiguriert ist, wobei der Turbinengenerator für erneuerbare Energien mindestens einen ersten Temperaturregler (110, 130) zum Regeln der Öltemperatur zu der Ölzufuhr mit reduzierter Temperatur umfasst, sodass das Öl, das von der Ölzufuhr mit reduzierter Temperatur zugeführt wird kühler ist als das Öl, das von dem Ölkreislauf zu den Arbeitskammern der Hydraulikpumpe und/oder dem Hydraulikmotor zugeführt wird.

2. Turbinengenerator für erneuerbare Energien nach Anspruch 1, wobei die Ölzuführungen mit reduzierter Temperatur in Fluidverbindung mit dem Ölkreislauf stehen, um Öl aus dem Ölkreislauf zu erhalten und die Temperatur des aufgenommenen Öls vor dem Einleiten davon in die Lager zu regeln.

3. Turbinengenerator für erneuerbare Energien nach Anspruch 2, wobei die oder jede Ölzufuhr mit reduzierter Temperatur in Fluidverbindung mit der Niederdruckleitung steht.

4. Turbinengenerator für erneuerbare Energien nach Anspruch 2, umfassend:
mindestens einen ersten Filter (100), der zum Filtern von mindestens einem Anteil des Öls angeordnet ist, das in dem Ölkreislauf zirkuliert, und mindestens einen zweiten Filter (112), der zwischen den Ölzuführungen mit reduzierter Temperatur angeordnet ist, um Öl zu filtern, bevor es in die Lager eingeleitet wird, wobei der mindestens eine zweite Filter feiner ist als der mindestens eine erste Filter.

5. Turbinengenerator für erneuerbare Energien nach Anspruch 1, ferner umfassend mindestens einen zweiten Temperaturregler zum Regeln der Öltemperatur in dem Ölkreislauf.

6. Turbinengenerator für erneuerbare Energien nach Anspruch 1, wobei die Hydraulikpumpe und/oder der Hydraulikmotor einen Durchflussbegrenzer um die entsprechende Drehwelle umfassen, der zum Teil Öl innerhalb eines Volumens, das die Lager aufweist, definiert und hält, wobei die Ölzufuhr mit reduzierter Temperatur in Fluidverbindung mit dem Volumen, das die Lager aufweist, steht.

7. Turbinengenerator für erneuerbare Energien nach Anspruch 1, wobei sich Öl aus dem Ölkreislauf und Öl aus der Ölzufuhr mit reduzierter Temperatur innerhalb der Hydraulikpumpe und/oder dem Hydraulikmotor mischen.

8. Turbinengenerator für erneuerbare Energie nach Anspruch 7, wobei die Hydraulikpumpe und/oder der Hydraulikmotor ein Kurbelwellengehäuse umfassen, das den Nocken und die Kolben umgibt, wobei sich Öl aus dem Ölkreislauf und Öl aus der Ölzufuhr mit reduzierter Temperatur innerhalb des Kurbelwellengehäuses mischen.

9. Turbinengenerator für erneuerbare Energien nach Anspruch 7, wobei die Temperatur zwischen dem Öl, das den Lagern der Hydraulikpumpe und/oder des Hydraulikmotors zugeführt wird, mindestens 40 °C weniger beträgt als die Temperatur des Öls aus den Arbeitskammern der Hydraulikpumpe und/oder des Hydraulikmotors.

10. Turbinengenerator für erneuerbare Energien nach Anspruch 1, wobei der Turbinengenerator für erneuerbare Energien ein Windturbinengenerator ist und der Rotor mehrere Schaufeln umfasst.

11. Verfahren zum Zuführen von Öl zu einer Hydraulikpumpe und/oder Hydraulikmotor eines Turbinengenerators für erneuerbare Energien (1), wobei die Turbine für erneuerbare Energien Folgendes umfasst:
einen Rotor (12), einen Generator (64) und ein Hydraulikgetriebe, das die Drehenergie von dem Rotor zum Generator überträgt,
wobei das Hydraulikgetriebe ein hydraulische Verstellpumpe (20) umfasst, die von dem Rotor angetrieben wird,
einen hydraulischen Verstellmotor (24), der mit dem Generator gekoppelt ist, und
einen Ölkreislauf, der eine Hochdruck-Ölleitung (26) umfasst, die zwischen einer Ablassseite der Hydraulikpumpe und einer Einlassseite des Hydraulikmotors angeordnet ist, und eine Niederdruckleitung (28), die zwischen einer Einlassseite der Hydraulikpumpe und einer Ablassseite des Hydraulikmotors angeordnet ist,
wobei die Hydraulikpumpe und der Hydraulikmotor jeweils Folgendes umfassen: mehrere Arbeitskammern (95), die jeweils von einem Zylinder (90) und einem Kolben (92) definiert werden, der verschiebbar in dem Zylinder angebracht ist, eine drehbare Welle, die mit einem Nocken gekoppelt ist, wobei der Nocken eine Nockenoberfläche aufweist, die in Eingriff mit den Kolben steht, wobei die Zyklen des Arbeitskammervolumens mit der Drehung der drehbaren Welle gekoppelt sind und die Lager in Eingriff mit der drehbaren Welle stehen und
mehrere Ventile zum Regeln der Nettoverschiebung von Arbeitsfluid zwischen jeder Arbeitskammer und den Hoch- und Niederdruckleitungen, wobei mindestens ein Ventil, das mit jeder Arbeitskammer verbunden ist, ein elektronisch gesteuertes Ventil (102) ist, wobei die elektronisch gesteuerten Ventile von der Steuerung zum Auswählen des Volumens des Arbeitslfluids, das von jeder Arbeitskammer in jedem Zyklus des Arbeitskammervolumens verdrängt wird, betrieben werden kann, um dadurch die Nettoverdrängungsrate des Arbeitsfluids von der Hydraulikpumpe bzw. dem Hydraulikmotor zu regeln;
wobei das Verfahren das Einleiten von Öl in die Lager der Hydraulikpumpe und/oder Hydraulikmotor bei geringeren Temperaturen als das Öl, das von dem Ölkreislauf zu den Arbeitskammern der Hydraulikpumpe und/oder Hydraulikmotor zugeführt wird, umfasst.

12. Verfahren nach Anspruch 11, wobei das Verfahren das Filtern des Öls umfasst, das in die Lager durch einen feineren Filter eingeleitet wird als das Öl in dem Ölkreislauf.

## Revendications

1. Générateur à turbine d'énergie renouvelable (1), comprenant :
un rotor (12), un générateur (64) et une transmission hydraulique qui transmet de l'énergie de rotation du rotor au générateur,
la transmission hydraulique comprenant une pompe hydraulique à déplacement variable (20) qui est entraînée par le rotor, un moteur hydraulique à déplacement variable (24) qui est accouplé au générateur, et un circuit d'huile comprenant une conduite d'huile haute pression (26) qui est disposée entre un côté de décharge de la pompe hydraulique et un côté d'admission du moteur hydraulique, et une conduite basse pression (28) qui est disposée entre un côté d'admission de la pompe hydraulique et un côté de décharge du moteur hydraulique,
chacun de la pompe hydraulique et du moteur hydraulique comprenant : une pluralité de chambres de travail (95), chacune étant définie par un cylindre (90) et un piston (92) monté de manière à pouvoir coulisser dans le cylindre, un arbre rotatif accouplé à une came, la came ayant une surface de came en prise avec lesdits pistons, les cycles du volume de la chambre de travail étant couplés à la rotation de l'arbre rotatif, des paliers en prise avec l'arbre rotatif et une pluralité de soupapes pour réguler le déplacement net du fluide de travail entre chaque chambre de travail et les conduites haute et basse pression,
au moins une soupape associée à chaque chambre de travail étant une soupape à commande électronique (102), lesdites soupapes à commande électronique pouvant être actionnées par l'unité de commande pour sélectionner le volume de fluide de travail déplacé par chaque dite chambre de travail lors de chaque cycle du volume de la chambre de travail pour ainsi réguler le taux de déplacement net de fluide de travail par la pompe hydraulique et le moteur hydraulique respectivement,
la pompe hydraulique et/ou le moteur hydraulique comprenant une alimentation en huile à température réduite (107, 128) configurée pour amener de l'huile aux paliers,
le générateur à turbine d'énergie renouvelable comprenant au moins un premier régulateur de température (110, 130) pour réguler la température de l'huile dans l'alimentation en huile à température réduite de telle sorte que l'huile fournie par l'alimentation en huile à température réduite soit plus froide que l'huile fournie par le circuit d'huile aux chambres de travail de la pompe hydraulique et/ou du moteur hydraulique respectivement.

2. Générateur à turbine d'énergie renouvelable selon la revendication 1, dans lequel les alimentations en huile à température réduite sont en communication fluidique avec le circuit d'huile pour recevoir de l'huile provenant du circuit d'huile et pour réguler la température de l'huile reçue avant qu'elle ne soit introduite dans les paliers.

3. Générateur à turbine d'énergie renouvelable selon la revendication 2, dans lequel la ou chaque alimentation en huile à température réduite est en communication fluidique avec la conduite basse pression.

4. Générateur à turbine d'énergie renouvelable selon la revendication 2, comprenant au moins un premier filtre (100) prévu pour filtrer au moins une proportion de l'huile circulant dans le circuit d'huile et au moins un deuxième filtre (112) interposé entre les alimentations en huile à température réduite pour filtrer l'huile avant qu'elle ne soit introduite dans les paliers, l'au moins un deuxième filtre étant plus fin que l'au moins un premier filtre.

5. Générateur à turbine d'énergie renouvelable selon la revendication 1, comprenant en outre au moins un deuxième régulateur de température pour réguler la température de l'huile dans le circuit d'huile.

6. Générateur à turbine d'énergie renouvelable selon la revendication 1, dans lequel la pompe hydraulique et/ou le moteur hydraulique comprennent respectivement un dispositif de restriction autour de l'arbre rotatif respectif, qui définit en partie et retient de l'huile à l'intérieur d'un volume comportant les paliers, l'alimentation en huile à température réduite étant en communication fluidique avec le volume comportant les paliers.

7. Générateur à turbine d'énergie renouvelable selon la revendication 1, dans lequel l'huile provenant du circuit d'huile et l'huile provenant de l'alimentation en d'huile à température réduite se mélangent à l'intérieur de la pompe hydraulique et/ou à l'intérieur du moteur hydraulique.

8. Générateur à turbine d'énergie renouvelable selon la revendication 7, dans lequel la pompe hydraulique et/ou le moteur hydraulique comprennent un carter de vilebrequin entourant la came et les pistons, l'huile provenant du circuit d'huile et l'huile provenant de l'alimentation en huile à température réduite se mélangeant à l'intérieur du carter de vilebrequin.

9. Générateur à turbine d'énergie renouvelable selon la revendication 7, dans lequel la température entre l'huile fournie aux paliers de la pompe hydraulique et/ou du moteur hydraulique est au maximum inférieure de 40° C à la température de l'huile reçue depuis le circuit d'huile par les chambres de travail de la pompe hydraulique et/ou du moteur hydraulique, respectivement.

10. Générateur à turbine d'énergie renouvelable selon la revendication 1, dans lequel le générateur à turbine d'énergie renouvelable est un générateur d'éolienne et le rotor comprend une pluralité de pales.

11. Procédé pour fournir de l'huile à une pompe hydraulique et/ou à un moteur hydraulique d'un générateur à turbine d'énergie renouvelable (1), la turbine d'énergie renouvelable comprenant :
un rotor (12), un générateur (64) et une transmission hydraulique qui transmet de l'énergie de rotation depuis le rotor au générateur,
la transmission hydraulique comprenant une pompe hydraulique à déplacement variable (20) qui est entraînée par le rotor, un moteur hydraulique à déplacement variable (24) qui est accouplé au générateur, et un circuit d'huile comprenant une conduite d'huile haute pression (26) qui est disposée entre un côté de décharge de la pompe hydraulique et un côté d'admission du moteur hydraulique, et une conduite basse pression (28) qui est disposée entre un côté d'admission de la pompe hydraulique et un côté de décharge du moteur hydraulique,
chacun de la pompe hydraulique et du moteur hydraulique comprenant : une pluralité de chambres de travail (95), chacune étant définie par un cylindre (90) et un piston (92) monté de manière à pouvoir coulisser dans le cylindre, un arbre rotatif accouplé à une came, la came ayant une surface de came en prise avec lesdits pistons, les cycles du volume de la chambre de travail étant couplés à la rotation de l'arbre rotatif, des paliers en prise avec l'arbre rotatif et une pluralité de soupapes pour réguler le déplacement net du fluide de travail entre chaque chambre de travail et les conduites haute et basse pression, au moins une soupape associée à chaque chambre de travail étant une soupape à commande électronique (102), lesdites soupapes à commande électronique pouvant être actionnées par l'unité de commande pour sélectionner le volume de fluide de travail déplacé par chaque dite chambre de travail lors de chaque cycle du volume de la chambre de travail et pour ainsi réguler le taux de déplacement net de fluide de travail par la pompe hydraulique et le moteur hydraulique respectivement,
le procédé comprenant l'introduction d'huile dans les paliers de la pompe hydraulique et/ou du moteur hydraulique à une température inférieure à celle de l'huile fournie par le circuit d'huile aux chambres de travail de la pompe hydraulique et/ou du moteur hydraulique, respectivement.

12. Procédé selon la revendication 11, dans lequel le procédé comprend la filtration de l'huile introduite dans les paliers à travers un filtre plus fin que celui pour l'huile dans le circuit d'huile.
